Europäisches Patentamt

European Patent Office

Office européen des brevets

(11) Veröffentlichungsnummer: **0 237 835 B1**

# EUROPÄISCHE PATENTSCHRIFT

(19)

(12)

(45) Veröffentlichungstag der Patentschrift: **13.05.92**

(21) Anmeldenummer: **87102600.1**

(22) Anmeldetag: **24.02.87**

(51) Int. Cl.⁵: **G01D 5/36,** G01B 11/00, G01B 11/14, G01B 7/14

(54) **Messanordnung.**

(30) Priorität: **17.03.86 DE 3608884**

(43) Veröffentlichungstag der Anmeldung:
**23.09.87 Patentblatt 87/39**

(45) Bekanntmachung des Hinweises auf die
Patenterteilung:
**13.05.92 Patentblatt 92/20**

(84) Benannte Vertragsstaaten:
**AT CH DE FR GB IT LI NL SE**

(56) Entgegenhaltungen:
**EP-A- 0 129 242**
**GB-A- 2 076 532**
**GB-A- 2 178 171**
**US-A- 3 283 162**

**IBM TECHNICAL DISCLOSURE BULLETIN**
**Band 26 Nr. 7A, Dezember 1983, Seiten**
**3395-3396; R. PRAKASH: "Displacement mea-**
**surement by a linear encoder using a diode**
**array".**

(73) Patentinhaber: **Mehnert, Walter, Dr.**
**Grillparzerstrasse 6**
**W-8012 Ottobrunn(DE)**

Patentinhaber: **Theil, Thomas**
**Alte-Traubinger-Strasse 5**
**W-8133 Feldafing(DE)**

(72) Erfinder: **Mehnert, Walter, Dr.**
**Grillparzerstrasse 6**
**W-8012 Ottobrunn(DE)**
Erfinder: **Theil, Thomas**
**Alte-Traubinger-Strasse 5**
**W-8133 Feldafing(DE)**

(74) Vertreter: **Strasser, Wolfgang, Dipl.-Phys et al**
**Patentanwälte Strohschänk, Uri & Strasser**
**Innere Wiener Strasse 8**
**W-8000 München 80(DE)**

## Beschreibung

Die Erfindung betrifft eine Meßanordnung zur Bestimmung des Abstandes, den ein Markierungselement, das an einem gegen die Meßanordnung verschiebbaren Körper vorgesehen ist, von einem Referenz-Markierungselement aufweist, gemäß dem Oberbegriff von Anspruch 1.

Eine Ausführungsform einer solchen Meßanordnung ist beispielsweise in der DE-OS 31 51 798 beschrieben. Dort wird der gegen die Meßanordnung verschiebbare Körper von einem Skalenträger gebildet, auf dessen Oberfläche eine Vielzahl von Skalenteilungs-Markierungen angebracht ist, von denen in jeder Stellung des Skalenträgers wenigstens eine durch den von der Abtasteinrichtung erzeugten Abtastfleck überstrichen wird. Als Referenz-Markierungselement dient eine durch die Meßanordnung selbst vorgegebene Referenzlinie. Eine solche Anordnung wird überall dort verwendet, wo die relative Lage zweier Körper mit großer Genauigkeit bestimmt und ausgemessen werden soll, die entweder linear gegeneinander verschoben oder um eine Achse gegeneinander verdreht werden können. Beispiele hierfür sind der Werkzeugschlitten einer Bearbeitungsmaschine, der mit großer Genauigkeit bezüglich eines in die Maschine eingespannten Werkstückes positioniert werden muß, oder das Fernrohr eines Nivelliergerätes, das bezüglich des Stativs in verschiedene Azimut-Winkelstellungen gebracht wird, deren Winkelabstände möglichst genau erfaßt werden sollen.

In all diesen Fällen ist an dem einen der beiden Körper, beispielsweise am Maschinenrahmen oder am Stativ, der Skalenträger und am anderen der beiden Körper, z.B. am Werkzeugschlitten oder am Drehfuß des Fernrohrs, die Abtasteinrichtung angeordnet, mit deren Hilfe einerseits die Anzahl der bei einer Linearverschiebung oder bei einer Drehbewegung überstrichenen Markierungen des Skalenträgers oder die Abstände dieser Markierungen erfaßt bzw. gemessen werden und andererseits bei Erreichen einer neuen Position der Abstand wenigstens einer der Markierungen von der Referenzlinie ermittelt wird. Letzteres dient insbesondere dazu, ein möglichst hohes Auflösungsvermögen zu erzielen ohne gleichzeitig die Dichte der Markierungen auf dem Skalenträger sehr groß wählen zu müssen. Mißt man überdies für alle einander benachbarten Markierungen die Abstände aus, die diese Markierungen jeweils in einer geeigneten Stellung von der Referenzlinie besitzen, so lassen sich hieraus die Abstände der Markierungen voneinander sehr genau erfassen, so daß der gesamte Skalenträger auf diese Weise nachträglich sehr genau geeicht werden kann, ohne daß an die Genauigkeit, mit der die Markierungen auf ihm angebracht worden sind, besondere Anforderungen gestellt werden müssen.

Gemäß der DE-OS 31 51 798 umfaßt die Abtasteinrichtung als Sender eine Lichtquelle und als Empfänger eine Differential-Photodiode, die einander gegenüberliegend auf den beiden Seiten des Skalenträgers angeordnet sind, so daß dieser und die auf ihm befindlichen Markierungen im Durchlichtverfahren abgetastet werden. Ebenso können sich aber Sender und Empfänger auch auf derselben Seite des Skalenträgers befinden; die Markierungen müssen sich dann von den sie umgebenden Bereichen des Skalenträgers nicht hinsichtlich der Transparenz sondern hinsichtlich des Reflexionsvermögens unterscheiden.

In jedem Fall wird gemäß der DE-OS 31 51 798 die gesamte, Sender und Empfänger umfassende Abtasteinrichtung in eine von einer Relativbewegung zwischen den beiden Körpern unabhängige oszillatorische Hin- und Herbewegung versetzt, um die oben erwähnten Interpolations- und Eichmessungen durchführen zu können. Mit Hilfe eines kleinen, sich mit der Abtasteinrichtung mitbewegenden Hilfs-Skalenträgers und einer feststehenden Hilfs-Abtasteinrichtung, die den Hilfs-Skalenträger abtastet, wird die Bewegung der Abtasteinrichtung überwacht und so vermessen, daß sich die Abstände von abgetasteten Markierungen des eigentlichen Skalenträgers von einer durch die Meßanordnung vorgegebenen Referenzlinie, beispielsweise von der Meßschwerlinie der Hilfs-Abtasteinrichtung, mit hoher Genauigkeit ermitteln lassen.

Eine weitere Anwendungsmöglichkeit für die eingangs erwähnte Meßanordnung stellen z.B. Justiervorrichtungen dar, bei denen ein Körper in eine genau definierte Lage gebracht werden muß, deren Erreichen z.B. dadurch festgestellt wird, daß der Abstand zwischen dem an dem Körper vorgesehenen Markierungselement und einem Referenz-Markierungselement gleich Null wird. Ein solcher Justiervorgang findet beispielsweise bei der Fotolitographie in der Halbleiterherstellung statt, wobei jeweils eine Fotomaske bezüglich einer Siliziumscheibe in eine genau definierte Lage gebracht werden muß. In diesem Fall wird das Erreichen der gewünschten Lage dadurch festgestellt, daß durch eine entsprechende Relativverschiebung zwischen Siliziumscheibe und Fotomaske zwei Justierkreuze miteinander zur Deckung gebracht worden sind, von denen das eine auf der Siliziumscheibe und das andere auf der Fotomaske vorgesehen ist und von denen eines als Markierungselement und das jeweils andere als Referenz-Markierungselement dient. Eine weitere Möglichkeit besteht darin, daß eine an dem zu verschiebenden Körper ohnehin vorhandene Linie, wie z.B eine Körperkante als Markierungselement dient und der Körper in eine Lage verschoben wird, in der der Abstand zwischen dieser Linie bzw. Körperkante und einem Referenz-Markierungselement zumindest in einer Projektions- oder Betrachtungsrichtung gesehen, verschwindet, d.h. zu Null wird, wenn der Körper die durch den Justiervorgang angestrebte Lage erreicht hat. Zur Automatisierung eines solchen Justiervorganges läßt sich grundsätzlich ebenfalls eine entsprechend abgewandelte Meßvorrichtung der in der DE-OS 31 51 798 beschriebenen Art mit einer mechanisch oszillierenden Abtasteinrichtung verwenden.

Ein Nachteil dieser bekannten Anordnung besteht jedoch darin, daß auch bei äußerster Miniaturbauweise für die Abtasteinrichtung eine gewisse Mindestmasse mechanisch hin- und herbewegt, d.h. periodisch beschleunigt und abgebremst werden muß. Hierdurch ergibt sich eine maximale Abtastfrequenz, die zumindest dann nicht ausreichend ist, wenn ein Maschinenschlitten oder ein einzujustierender Körper mit hoher Geschwindigkeit in eine genau definerte Lage bewegt oder beispielsweise ein Zielverfolgungs-Fernrohr mit einem sich schnell bewegenden Ziel mitgedreht werden soll.

Demgegenüber liegt der Erfindung die Aufgabe zugrunde, eine Meßanordnung der eingangs genannten Art so weiterzubilden, daß eine wesentlich größere Abtast- und Meßfrequenz erreicht werden kann.

Zur Lösung dieser Aufgabe sieht die Erfindung die im Anspruch 1 zusammengefaßten Merkmale vor.

Durch diese erfindungsgemäßen Maßnahmen wird je nach Art der verwendeten Ablenkvorrichtung die Masse, die zur Abtastung des Skalenträgers hin- und herbewegt werden muß, entweder auf ein absolutes Minimum oder sogar gänzlich auf Null reduziert.

Eine weitgehende Reduzierung der zu bewegenden Masse ergibt sich z.B. dann, wenn als Ablenkvorrichtung ein stäbchenförminger Piezoschwinger verwendet wird, der an seinem einen Ende fest eingespannt ist und im Bereich seines freien Endes einen kleinen Spiegel, z.B. in Form einer aufgedampften Spiegelschicht, trägt, von dem ein von einer als Sender dienenden Lichtquelle stammendes Lichtbündel zur Erzeugung eines Abtastflecks auf die das Markierungselement aufweisende Oberfläche des zu bewegenden Körper projiziert wird. Durch die Ansteurung mit einem entsprechenden elektrischen Signal kann das Stäbchen aus piezoelektrischem Material in Biegeschwingungen versetzt werden, wodurch der Abtastfleck über die Oberfläche des Körpers periodisch hin- und herbewegt wird. Bei geeigneter Dimensionierung des Piezoschwingers lassen sich hier Abtastfrequenzen in der Größenordnung von einigen Kilohertz erzielen.

Völlig ohne mechanisch bewegte Massen kommt man aus, wenn man erfindungsgemäß als Sender eine Lichtquelle verwendet, die ein Lichtbündel abgibt, das dann, wenn es ungehindert auf die Oberfläche des Körpers auftreffen könnte, dort einen Querschnitt besitzen würde, der dem gesamten Flächenbereich entspricht, über den der Abtastfleck bewegt werden soll. In diesem Lichtbündel wird vor der Oberfläche des Körpers eine Flüssigkristall-Anordnung angebracht, die so mit Elektroden versehen ist, daß sie aufgrund einer entsprechenden elektrischen Ansteuerung nur in einem sehr kleinen, genau definierten Flächenbereich das Licht vom Sender zur Oberfläche des Körpers durchläßt, um dort einen Abtastfleck zu erzeugen, während in allen anderen Flächenbereichen das Licht nicht durchgelassen wird. Durch eine Änderung der Ansteuerung entsprechend ausgebildeter Elektroden kann dann der so erzeugte Abtastfleck in beliebigen Richtungen über die Oberfläche des Körpers verschoben werden.

Eine weitere, besonders bevorzugte Ausführungsform, mit der sich noch größere Abtastfrequenzen (bis zu 100 kHz und darüber) erreichen lassen, sieht vor, daß als Sender die Elektronenkanone einer Elektronenstrahlröhre dient, deren elektrostatische Ablenkeinheit die Ablenkvorrichtung bildet, mit deren Hilfe der Elektronenstrahl so beeinflußt werden kann, daß sich der von diesem Elektronenstrahl beim Auftreffen auf den Leuchtschirm der Röhre erzeugte Lichtfleck in beliebigen Richtungen über die Oberfläche des Körpers bewegt. Mit einer solchen Röhre kann nicht nur eine bei den nachfolgenden Beispielen beschriebene lineare oder kreisbogenförmige Hin- und Herbewegung des Abtastflecks auf sehr einfache Weise realisiert werden, bei der beispeilsweise immer nur ein Teil eines Skalenträgers abgetastet wird. Vielmehr ist es auch möglich, z.B. einen kreisförmigen Skalenträger mit radial verlaufenden Markierungen so zu dimensionieren und anzuordnen, daß er völlig im Projektionsbereich des Elektronenstrahls liegt und daher in jeder Winkelstellung durch den Abtastfleck vollständig abgetastet werden kann. Kennzeichnet man die einzelnen Markierungen z.B. dadurch als Individuen, daß jede von ihnen zu ihren Nachbarmarkierungen einen Abstand besitzt, der auf dem ganzen Skalenträger nur ein einziges Mal vorkommt, so können bei einer solchen Anordnung alle Markierungen zur Bestimmung der momentanen Winkelstellung eines solchen Skalenträgers herangezogen werden, wodurch sich eine besonders große Genauigkeit erzielen läßt.

Auch ist es bei Verwendung einer Elektronenstrahlröhre ohne weiteres möglich, zwei oder mehr Abtastflecke gleichzeitig zu erzeugen und diese in einer fest vorgebbaren, genau definierten zeitlich/örtlichen Korrelation über die Oberfläche des Körpers zu bewegen, wie dies bei einem weiter unten noch genauer beschriebenen Ausführungsbeispiel geschieht.

Zwar ist aus der GB-A-2 076 532 ein optischer Scanner zum Abtasten von Bildvorlagen bekannt, bei dem mit Hilfe einer Kathodenstrahlröhre ein Abtast-Lichtfleck erzeugt wird, der durch geeignete Ansteuerung der Röhren-Ablenkeinheit über die abzutastende Bildvorlage verschoben werden kann, ohne daß eine mechanische Relativbewegung zwischen Bildvorlage und Abtastvorrichtung erforderlich ist.

Da es bei dieser bekannten Vorrichtung aber lediglich darauf ankommt, die optischen Eigenschaften der Bildvorlage, nämlich Transparenz bzw. Reflektivität "punktweise" zu erfassen, wird ein bei der genauen Positionsmessung von Markierungen wesentliches Problem in der GB-A-2 076 532 weder angesprochen noch ein zu seiner Lösung gangbarer Weg aufgezeigt:

Dieses Problem besteht darin, daß man beim einfachen Überstreichen eines Markierungselementes durch einen Abtastfleck ein Signal erhält, das ausgehend von einem Ruhepegel (in positiver oder negativer Richtung) ansteigt, dabei einen ersten Wendepunkt durchläuft, dann ein Maximum erreicht, um hierauf wieder abzufallen und nach Durchlaufen eines zweiten Wendepunktes wieder zum Ruhepegel zurückzukehren. Zwar läßt sich auch bei einem solchen zeitlich ausgedehnten Signal ein Zeitpunkt festlegen und jedesmal genau ermitteln, der als der eigentliche "Abtastzeitpunkt" des Markierungselementes gelten soll. So kann man zum Beispiel den Mittelpunkt zwischen den beiden Wendepunkten als Ersatz für den Zeitpunkt betrachten, in dem eine das räumlich ausgedehnte, reale Markierungselement ersetzende, unendlich schmale "ideale" Marke von einem ebenfalls unendlich schmalen Abtastfleck überstrichen würde.

Um bei einer solchen Vorgehensweise zu brauchbaren Ergebnissen zu gelangen, ist jedoch ein vergleichsweise großer elektronisch-meßtechnischer Aufwand erforderlich. Um dies zu vermeiden und das von optischen Scannern bekannte Abtastverfahren für einen Einsatz bei einer Abstandsmeßvorrichtung der vorliegenden Art im Rahmen eines vertretbaren Aufwandes überhaupt erst geeignet zu machen, wird erfindungsgemäß dafür gesorgt, daß das Ausgangssignal des Empfängers ein Differentialverhalten aufweist, obwohl mit einem vergleichsweise großen Abtastfleck eine Markierung abgetastet wird, die keineswegs unendlich schmal ist. Ein solches ein Differentialverhalten aufweisendes Signal ist dadurch ausgezeichnet, daß es ausgehend von einem Ruhepegel erst ein Maximum in der einen und dann ein Maximum in der anderen Richtung durchläuft, bevor es zum Ruhepegel zurückkehrt. Zwischen den beiden Maxima weist das Signal einen sehr steilen Durchgang durch den Ruhepegel auf, der im vorliegenden Zusammenhang kurz als "Nulldurchgang" bezeichnet wird, obwohl der Ruhepegel nicht notwendigerweise mit dem Nullpotential identisch ist. Dieser "Nulldurchgang" kann auf sehr einfache Weise elektronisch erfaßt und zur Auslösung weiterer Rechen- und Auswertevorgänge herangezogen werden. Vor allem ist dieser Zeitpunkt unabhängig von der konkreten Gestalt des realen Markierungselementes und des zu seiner Abtastung verwendeten Abtastfleckes hochgenau reproduzierbar und daher als ideale Marke hervorragend geeignet.

Drei bevorzugte Varianten, die es erlauben, bei der erfindungsgemäßen Meßanordnung ein Differentialverhalten des Empfänger-Ausgangssignals zu erzielen, sind in den abhängigen Ansprüchen 7, 8, und 9 niedergelegt. In diesen Ansprüchen ist zunächst die Abtastung eines einzelnen Markierungselementes beschrieben, die erfindungsgemäß bei den oben erwähnten Justiervorgängen zum Einsatz kommen kann.

Demgegenüber ist in den Ansprüchen 10 bis 13 die erfindungsgemäße Ausbildung von Skalenträgern entsprechend den bevorzugten Varianten zur Erzielung eines Differentialverhaltens des Empfänger-Ausgangssignals niedergelegt, wobei jeder Skalenträger eine Vielzahl von gleich ausgebildeten Markierungselementen entsprechend den Ansprüchen 7, 8 oder 9 aufweist, die jeweils noch bestimmte zusätzliche Merkmale erfüllen müssen, die in den Ansprüchen 11, 12 oder 13 angegeben sind. Derartige Skalenträger und ihre Abtastung werden im Zusammenhang mit den Zeichnungsfiguren noch genauer erläutert.

Hier sei noch auf einen Vorteil hingewiesen, den eine bevorzugte Ausführungsform der erfindungsgemäßen Meßanordnung bietet: Bei jedem Abtastvorgang startet der Abtastfleck von einem durch die Geometrie der Abtastvorrichtung und eine Anfangs-Ablenkspannung vorgegebenen Anfangspunkt und bewegt sich dann bis zu einem durch die Geometrie der Abtastvorrichtung und eine End-Ablenkspannung definierten Endpunkt um hierauf wieder zum Ausgangspunkt zurückzukehren. Verwendet man als Ablenkspannung z.B. eine Dreiecksspannung, so erfolgt sowohl die Bewegung vom Anfangs- zum End- bzw. Umkehrpunkt als auch vom Umkehrpunkt zurück zum Anfangspunkt jeweils kontinuierlich und zeitlich in etwa linear. Man kann also davon ausgehen, daß zu jedem Zeitpunkt während einer Abtastbewegung der Abstand des Abtastfleckes bzw. seines "Schwerpunktes" von einer durch die Geometrie der Abtasteinrichtung festgelegten Referenzlinie (z.B. von der sich senkrecht zur Bewegungsrichtung des Skalenträgers durch den Anfangspunkt der Abtastfleck-Bewegungsbahn erstreckenden Linie) in eindeutiger Weise mit der zu diesem Zeitpunkt verwendeten Ablenkspannung verknüpft ist, die Ablenkspannung also als Maß für die "Auslenkung" des Abtastflecks verwendet werden kann. Um den Abstand eines Markierungselementes von der genannten Referenzlinie, die dann als Referenz-Markierungselement dient, zu ermitteln, genügt es also, den Wert zu erfassen, den die Ablenkspannung in dem Zeitpunkt besitzt, in dem das Ausgangssignal des Empfängers beim Abtasten dieses Markierungselementes z.b. den oben erwähnten "Nulldurchgang" durchläuft. Eine besondere Zeitmessung ist dabei nicht mehr erforderlich.

Besonders einfach gestaltet sich die Erfassung des jeweiligen Wertes der Ablenkspannung, wenn man diese Ablenkspannung mit Hilfe eines Digital/Analog-Wandlers aus einer entsprechenden Folge von Digital-Wörtern erzeugt, weil dann das zum Zeitpunkt des "Nulldurchgangs" an den Digital/Analog-Wandler angelegte Digital- oder Binär-Wort ein unmittelbares Maß für die "Auslenkung" des Abtastflecks darstellt. Es genügt also, beispielsweise einen konkret verwendeten Skalenträger in einer solchen Meßanordnung einmal zu eichen und die entsprechenden Werte in einem elektronischen Speicher abzulegen, um dann jederzeit mit Hilfe der Ablenkspannung die momentane Linearverschiebung oder Winkelstellung des Skalenträgers messend erfassen zu können.

Für die Eichung sowohl des Skalenträgers als auch der Ablenkspannungswerte ist es vorteilhaft, wenn die Meßanordnung ein eingebautes Eichnormal z.B. in Form eines kleinen Hilfs-Skalenträgers trägt, deren Abstand mit großer Genauigkeit bekannt ist. Der Abtastfleck kann dann so gesteuert werden, daß er zumindest vor Beginn der eigentlichen Messung, vorzugsweise aber auch während des Meßbetriebs immer wieder zwischendurch diesen Hilfs-Skalenträger abtastet.

Die Erfindung wird im folgenden anhand von Ausführungsbeispielen unter Bezugnahme auf die Zeichnung beschrieben; in dieser zeigt:

Fig. 1 eine schematische Schnittansicht durch eine erfindungsgemäße Meßanordnung mit einem Skalenträger als verschiebbaren Körper,

Fig. 2 eine schematische Draufsicht auf den Skalenträger der Meßanordnung aus Fig. 1,

Fig. 3 das Ausgangssignal, das der Empfänger der Meßanordnung aus den Fig. 1 und 2 beim Abtasten einer Markierung liefert,

Fig. 4 eine schematische Draufsicht auf einen Skalenträger gemäß einer zweiten Ausführungsform, bei der das Differentialverhalten mit Hilfe von Markierungen erreicht wird, die aus zwei Bereichen unterschiedlicher Transparenz bestehen,

Fig. 5 das Ausgangssignal des Empfängers beim Abtasten der Markierungen aus Fig. 4,

Fig. 6 eine schematische Draufsicht auf ein drittes Ausführungsbeispiel eines Markierungsträgers, wobei das Differentialverhalten durch die Verwendung von zwei getrennten Photodioden und zwei Abtastflecken erzielt wird, und

Fig. 7 das Ausgangssignal des Empfängers beim Abtasten der Markierungen aus Fig. 6.

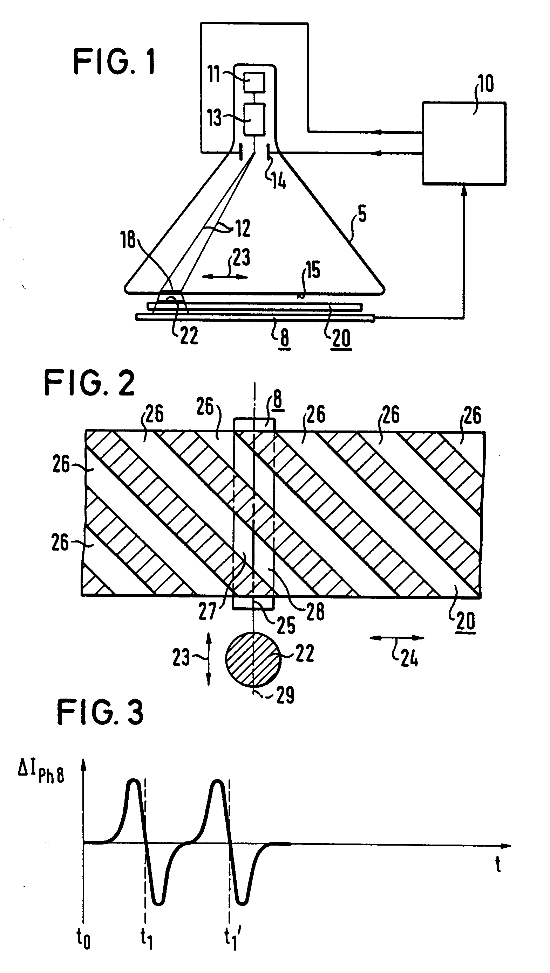

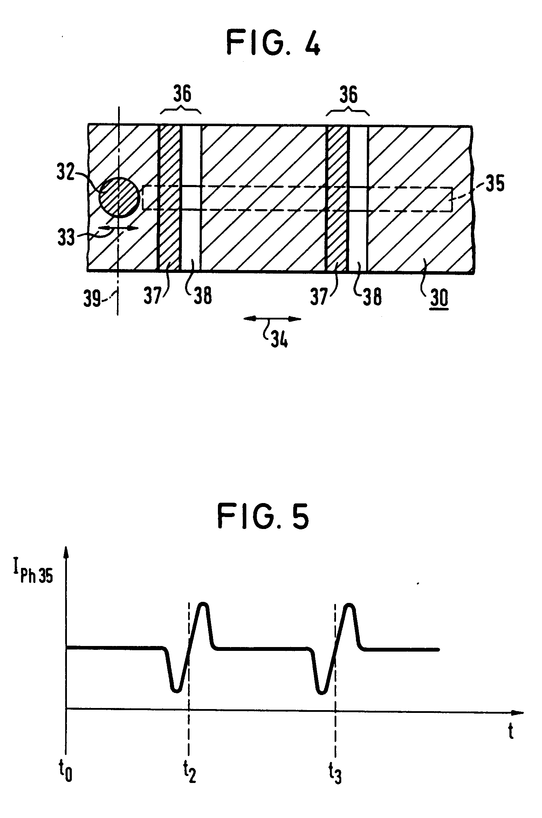

Fig. 1 zeigt eine erste Ausführungsform der erfindungsgemäßen Meßanordnung, deren Besonderheiten insbesondere unter Bezugnahme auf die Fig. 2 und 3 noch genauer erläutert werden. Darüber hinaus gibt Fig. 1 aber auch den prinzipiellen Aufbau einer erfindungsgemäß bevorzugten Meßanordnung wieder, wie er auch bei den im Zusammenhang mit den Fig. 4 und 5 bzw. 6 und 7 geschilderten Ausführungsbeispielen Verwendung finden kann.

Man entnimmt der Fig. 1, daß die Abtasteinrichtung einer erfindungsgemäß bevorzugten Meßanordnung eine Elektronenstrahlröhre 5 umfaßt, deren Elektronenkanone 11 als "Sender" dient, während als "Empfänger" allgemein eine Photodiode, hier im besonderen eine Differential-Photodiode 8 vorgesehen ist, die in einem fest vorgegebenen Abstand gegenüber dem Leuchtschirm 15 der Elektronenstrahlröhre 5 so angeordnet ist, daß ihre lichtempfindlichen Flächen dem Leuchtschirm 15 zugewandt sind.

Die Elektronenkanone 11 dient dazu, einen Elektronestrahl 12 zu erzeugen, der mit Hilfe eines Wehnelt-Zylinders 13 fokussiert und von elektrostatischen Ablenkplatten 14 abgelenkt werden kann. In Fig. 1 sind wegen der Schnittdarstellung nur zwei solche Platten 14 wiedergegeben, die eine Ablenkung des Elektronenstrahls 12 in der Zeichenebene ermöglichen. Bei dem hier betrachteten Ausführungsbeispiel ist diese eindimensionale Ablenkmöglichkeit völlig ausreichend. Soll der Elektronenstrahl jedoch auch in der in Fig. 1 zur Zeichenebene senkrechten Ebene auslenkbar sein, so können erfindungsgemäß entsprechende weitere Ablenkplatten vorgesehen sein.

Die Meßanordnung umfaßt weiterhin eine Speicher- und Recheneinheit 1O, die einerseits die Ablenkspannung an die Ablenkplatten 14 liefert und andererseits das Ausgangssignal der Differential-Photodiode 8 empfängt, um mit Hilfe dieses Ausgangssignals die momentane Lage eines verschiebbaren Körpers, der hier von einem Skalenträger 2O gebildet wird, zu ermitteln, der sich zwischen dem Leuchtschirm 15 und der Photodiode 8 befindet und bei dem in Fig. 1 dargestellten Ausführungsbeispiel als Linearmaßstab gedacht ist, der senkrecht zur Zeichenebene verschiebbar ist.

Wie man der Fig. 1 weiterhin entnimmt, erzeugt der Lichtfleck 18 auf der dem Leuchtschirm 15 zugewandten Oberfläche des Skalenträgers 2O, von der angenommen wird, daß sie auch die abzutastenden Markierungen trägt, einen Abtastfleck 22, der in Richtung des Doppelpfeils 23 über die Oberfläche des Skalenträgers 2O hin- und herverschiebbar ist. Damit die durch die Abtastung erzielten Meßwerte von dem sich unter Umständen geringfügig ändernden Abstand zwischen dem Leuchtschirm 15 und der ihm zugewandten Oberfläche des Skalenträgers 2O unabhängig sind, ist es erforderlich, daß die Hauptachse des vom Lichtfleck 18 ausgehenden Lichtbündels senkrecht auf der abzutastenden Oberfläche des Skalenträgers 2O steht. Dies ist bei einer Elektronenstrahlröhre 5 ohnehin mit sehr guter Näherung der Fall. Sollte dies jedoch nicht ausreichend sein, kann mit einer zwischen dem Leuchtschirm 15 und dem Skalenträger 2O vorgesehenen Projektionsvorrichtung, die im einfachsten Fall aus einer einzelnen Linse besteht, für eine völlig senkrechten Lichteinfall auf dem Skalenträger 2O gesorgt werden.

In Fig. 2 ist eine Draufsicht auf den Skalenträger 2O und die darunter befindliche Differential-Photodiode 8 wiedergegeben, wobei nicht nur die Elektronenstrahlröhre 5 weggelassen sondern auch der Markierungsträger um 9O° gedreht ist, so daß der Doppelpfeil 23, in dessen Richtung der Abtastfleck 23 verschoben werden kann, in Fig 2 von oben nach unten verläuft, während der Doppelpfeil 24 die Bewegungsrichtung des Skalenträgers 2O wiedergibt.

Man sieht, daß die Differential-Photodiode 8, deren elektrische Anschlüsse der Einfachheit halber weggelassen sind, so angeordnet ist, daß ihr Steg 25 unter einem von O° verschiedenen Winkel, hier unter einem Winkel von 9O° zur Bewegungsrichtung 24 des Skalenträgers 2O verläuft.

Der Skalenträger 2O trägt eine Vielzahl von Markierungen 26, die sowohl mit der Längsrichtung des Steges 25 als auch mit der Bewegungsrichtung 24 des Skalenträgers einen von O° und von 9O° verschiedenen Winkel, hier einen Winkel von ca. 45° einschließen.

Der Abtastfleck 22 wird bei diesem Ausführungsbeispiel in Richtung des Doppelpfeiles 23, d.h. genau parallel zum Steg 25 der Photodiode 8 über die Oberfläche des Skalenträgers 2O bewegt. Die Differential-Photodiode 8 besitzt eine Länge, die etwas größer als die Breite des Skalenträgers 2O ist. In der Fig. 2 gezeigten Stellung des Skalenträgers 2O, in der sich zwei Markierungen 26 im Abtastbereich befinden, besitzt das Ausgangssignal der Differential-Photodiode 8 den in Fig. 3 wiedergegebenen Verlauf; d.h. es gibt innerhalb jedes Abtastzyklus zwei Zeitpunkte $t_1$ und $t_1'$, in denen die Helligkeit des auf jede der beiden lichtempfindlichen Flächen 27, 28 der Differential-Photodiode auftreffenden Lichts gleich groß ist, so daß das Ausgangssignal der Differential-Photodiode die in Fig. 3 gezeigten Nulldurchgänge aufweist. Der zeitliche Abstand der Zeitpunkte $t_1$ bzw. $t_1'$ vom Startzeitpunkt $t_0$ des betreffenden Abtastvorganges liefert ein Maß dafür, wie weit die betrachtete Markierung 26 gegen die Referenzlinie 29 nach links oder nach rechts verschoben ist, d.h. also ein Maß für den "Abstand" der abgetasteten Markierung 26 von der Referenzlinie 29, die hier mit dem Steg 25 der Differential-Photodiode 8 zusammenfällt. Abstand, Breite und Neigung der Markierung 26 sind so aufeinander abgestimmt, daß das obere Ende einer jeden Markierung 26 das untere Ende der in Fig. 2 jeweils linken Nachbarmarkierung so weit überlappt, daß im Übergangsbereich für beide Markierungen 26 ein Nulldurchgangssignal der eben beschriebenen Art erhalten wird und somit ein nahtloser Anschluß von einer Markierung 26 zur nächsten gewährleistet ist.

Zwar wird hier der Abtastfleck 22 in Richtung der Referenzlinie 29 verschoben, doch wird durch die Schrägstellung der Markierungen 26 jeder Auslenkung des Abtastflecks 22 in Richtung des Doppelpfeils 23 eine entsprechende Verschiebung des Skalenträgers 2O in Richtung des Doppelpfeils 24 zugeordnet.

Aus der anhand der Fig. 2 und 3 durchgeführten Beschreibung eines Skalenträgers ergibt sich unmittelbar, daß ein gegen die Meßanordnung verschiebbarer Körper, der nur ein einziges Markierungselement trägt, das genauso ausgebildet und angeordnet ist, wie irgendeine der Markierungen 26, mit Hilfe dieses Markierungselementes und der erfindungsgemäßen Meßanordnung auf eine vorgegebene Lage einjustiert werden kann, in der beispielsweise das Ausgangssignal der Differential-Photodiode 8 bei einem vorgebbaren Wert der Ablenkspannung seinen Nulldurchgang durchläuft. In diesem Fall dient dann die der vorgegebenen Ablenkspannung entsprechende Referenzlinie 29 als Referenz-Markierungselement. Handelt es sich bei dem Justiervorgang um einen Fotolitographie-Schritt in der Halbleiterherstellung, so kann beispielsweise zunächst die Siliziumscheibe in Richtung des Doppelpfeils 24 so lange verschoben werden, bis ein auf ihr angebrachtes Markierungselement, das entsprechend einer Markierung 26 ausgebildet und angeordnet ist, in den Bewegungsbereich des Abtastfleckes 22 kommt und von diesem überstrichen werden kann. Dann wird die Scheibe weiter so lange verschoben, bis der Nulldurchgang des Ausgangssignals der Photodiode bei einer willkürlich vorgegebenen Ablenkspannung auftritt.

Dann wird in gleicher Weise mit der Photomaske verfahren, die ein entsprechend ausgebildetes und angeordnetes Markierungselement aufweist. Im Grunde genommen werden hier also nacheinander zwei verschiedene verschiebbare Körper auf ein und dieselbe Referenzlinie 29 einjustiert. In entsprechender Weise ist auch eine Justierung auf zwei voneinander verschiedene, z.B. durch zwei verschiedene willkürlich gewählte Ablenkspannungen vorgegebene Referenzlinien möglich. Damit in diesem Fall die auf der Siliziumscheibe und der Photomaske vorhandenen Strukturen in die richtige Endlage kommen, müssen lediglich die beiden Markierungselemente in entsprechender Weise gegeneinander versetzt angeordnet sein. In der zur Richtung des Doppelpfeils 24 in Fig. 2 senkrechten Richtung kann mit Hilfe einer zweiten Differential-Photodiode, die gegen die Differential-Photodiode 8 um 90° verdreht angeordnet ist, eine entsprechende Justierung vorgenommen werden, wobei die gleichen oder andere Markierungselemente abgetastet werden können.

Diese Ausführungen hinsichtlich der für Justiervorgänge von Körpern, die keine Markierungsskalen tragen, erforderlichen Maßnahmen an den verschiebbaren Körpern und hinsichtlich des durchzuführenden Funktionsablaufes gelten in entsprechender Weise auch für die beiden Varianten zur Erzeugung eines ein Dfifferentialverhalten aufweisenden Ausgangssignals, die im folgenden unter Bezugnahme auf die Fig. 4 bis 7 wieder unter der Annahme beschrieben werden, daß es sich bei dem verschiebbaren Körper jeweils um einen Skalenträger handelt.

Zu diesem Zweck sind in Fig. 4 diejenigen Teile eines weiteren Ausführungsbeispiels einer erfindungsgemäßen Meßanordnung wiedergegeben, die sich von dem unter Bezugnahme auf die Fig. 2 geschilderten Ausführungsbeispiel unterscheiden, nämlich ein in Draufsicht dargestellter Skalenträger 3O, der in Richtung des Doppelpfeiles 34 verschiebbar ist. Unter dem Skalenträger 3O befindet sich eine einfache langgestreckte Photodiode 35, die vorteilhafterweise zwei Markierungen überdeckt, deren Längsrichtung mit der Bewegungsrichtung 34 des Skalenträgers 3O einen von 90° verschiedenen Winkel, hier einen Winkel von 0° einschließt. Der Abtastfleck 32 wird hier in Richtung des Doppelpfeiles 33, d.h. also in Längsrichtung der Photodiode 35 und damit in der gleichen Richtung bewegt, in der auch der Skalenträger 3O verschoben werden kann. Um mit dieser Anordnung ein Empfänger-Ausgangssignal mit Differentialverhalten zu erzielen, besteht jede der Markierungen 36 aus zwei Bereichen 37, 38 die die Form von zueinander parallelen, unmittelbar nebeneinanderliegenden Streifen besitzen, von denen jeweils der Streifen 37 eine wesentlich geringere und der Streifen 38 eine wesentlich größere Transparenz besitzt, als die übrigen, beispielsweise halbdurchlässigen Bereiche des Skalenträgers 3O. Der Abstand der Markierungen 36 ist hier so gewählt, daß der Abtastfleck 32 bei jeder beliebigen Stellung des Skalenträgers 3O wenigstens zwei Markierungen 36 überstreicht, wodurch sich das in Fig. 5 dargestellte Ausgangssignal ergibt. Man sieht, daß dieses Ausgangssignal sich zunächst auf einem der mittleren Transparenz des Skalenträgers 3O entsprechenden mittleren Niveau bewegt, dann bei Erreichen des Bereiches 37 der ersten abgetasteten Markierung 36 auf ein Minimum abfällt, beim Überstreichen der Grenzlinie zwischen den beiden Bereichen 37 und 38 einen "Nulldurchgang" aufweist um danach beim Überstreichen des Bereiches 38 ein Maximum zu durchlaufen. Die gleiche Signalfolge ergibt sich beim Überstreichen der nächsten Markierung 36. Der zeitliche Abstand, den die beiden Zeitpunkte $t_2$ und $t_3$, in denen jeweils ein Nulldurchgang durchlaufen wird, vom Startzeitpunkt $t_0$ des jeweiligen Abtastvorganges besitzen, kann wieder als Maß für den räumlichen Abstand der beiden abgetasteten Markierungen 36 von der Referenzlinie 39 verwendet werden, die durch die Lage des Abtastfleckes 32 beim Beginn einer jeden Abtastbewegung gegeben ist.

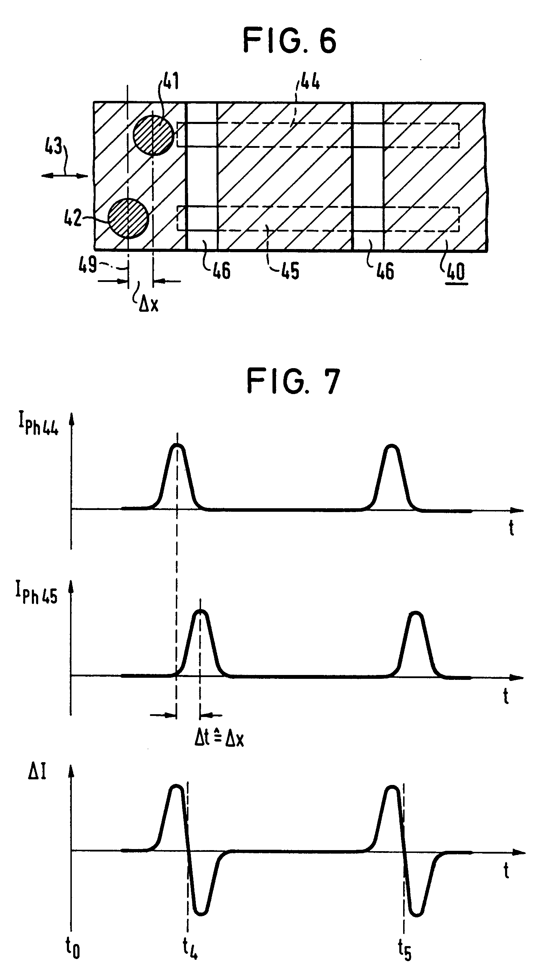

Eine dritte Ausführungsform, die in Fig. 6 wiedergegeben ist, umfaßt einen Skalenträger 4O, unter dem zwei langgestreckte Photodioden 44, 45 so angeordnet sind, daß ihre Längsrichtungen sich in Richtung des Doppelpfeiles 43 erstrecken, der die Bewegungsrichtung des Skalenträgers 4O angibt. Bei den Markierungen 46 handelt es sich hier um einfache Streifen, die sich in ihrer Transparenz von den sie umgebenden Bereichen des Skalenträgers 4O unterscheiden, z. B. um völlig transparente Streifen in einem ansonsten lichtundurchlässigen Skalenträger. Der Skalenträger wird hier mit Hilfe von zwei Abtastflecken 41 und 42 abgetastet, die sich beide in Richtung des Doppelpfeils 43 so bewegen, daß der Abtastfleck 41 über der Photodiode 44 und der Abtastfleck 42 über der Photodiode 45 verschoben wird. Die beiden Abtastflecke 41 und 42 sind in Richtung ihrer Bewegung, d.h. in Richtung des Doppelpfeiles 43 ständig um eine Abstand Δ x gegeneinander versetzt, so daß beim Abtasten ein und derselben Markierung 46 die Photodiode 44 immer etwas früher ein Ausgangssignal liefert als die Photodiode 45. Dies ist in den beiden obersten Zeilen der Fig. 7 für die Abtastung von zwei aufeinanderfolgenden Markierungen 46 wiedergegeben. Bildet man auf elektronischem Weg das Differenzsignal der beiden Photodioden-Ausgangssignale, so erhält man das in der untersten Zeile von Fig. 7 wiedergegebene Empfänger-Ausgangssignal, das wieder das gewünschte Differentialverhalten zeigt. Auch hier gilt, daß der zeitliche Abstand der beiden Zeitpunkte $t_4$ und $t_5$, in denen dieses Empfänger-Ausgangssignal seine Nulldurchgänge aufweist, vom Startzeitpunkt $t_0$ einer jeden Abtastbewegung ein Maß für den räumlichen Abstand der beiden abgetasteten Markierungen 46 von der durch den einen der beiden Beleuchtungsfleck- Startpunkte gegebenen Referenzlinie 49 darstellt.

Es sei hier nochmals ausdrücklich darauf hingewiesen, daß es bei den geschilderten Ausführungsbeispielen nicht erforderlich ist, die Zeitabstände der Zeitpunkte $t_1$ bzw. $t_2$, $t_3$ bzw. $t_4$, $t_5$ vom jeweiligen Startzeitpunkt $t_0$ zu messen. Dies ist zwar prinzipiell möglich, doch kann statt dessen die zum jeweiligen Zeitpunkt $t_1$ bis $t_5$ an den Ablenkplatten 14 anliegende Ablenkspannung unmittelbar als Maß für die zu dem betreffenden Zeitpunkt erreichte Auslenkung des Lichtflecks und damit als Maß für den Abstand der betreffenden Markierung 26 bzw. 36 bzw. 46 von der zugehörigen Referenzlinie 29 bzw. 39 bzw. 49 verwendet werden.

Bei den in den Figuren 4 und 6 wiedergegebenen Ausführungsbeispielen kann anstelle der langgestreckten Photodioden 35 bzw. 44 bzw. 45 auch jeweils eine "punktförmige" Photodiode verwendet werden, auf die die Bahn des zugehörigen Abtastflecks 32 bzs. 41 bzw. 42 durch eine entsprechende Optik abgebildet wird. Zwar wurde bei den beschriebenen Ausführungsbeispielen von der Verwendung linearer Skalentäger ausgegangen. Statt dessen können aber auch teilkreisförmige oder kreisförmige Skalenträger abgetastet werden, wobei dann die Richtungsangaben "senkrecht zur Bewegungsrichtung" und " in Bewegungsrichtung" durch die Richtungsangaben "in radialer Richtung" und "in tangentialer Richtung" zu ersetzen sind. Insbesondere in den Fällen, in denen sich der gesamte kreisförmig oder kreisringförmige Skalenträger unter dem Leuchtschirm einer Elektronenstrahlröhre befindet und daher mit einer einzigen, auf einer Kreisbahn verlaufenden Abtastbewegung des Abtastflecks alle Markierungen überstrichen werden können, ist es zumindest für die Gewinnung von Eichwerten vorteilhaft, die Zeitabstände zwischen den zu den einzelnen Markierungen gehörenden Nulldurchgängen des Empfänger-Ausgangssignals hochgenau auszumessen; multipliziert man diese Zeitabstände mit der sehr genau vorgebbaren Umlaufgeschwindigkeit der Abtastung, so erhält man mit sehr großer Genauigkeit die Winkelabstände der einzelnen Markierungen.

**Patentansprüche**

1. Meßanordnung zur Bestimmung des Abstandes, den ein Markierungselement (26; 36; 46), das an einem gegen die Meßanordnung verschiebbaren Körper (20; 30; 40) vorgesehen ist, von einem Referenz-Markierungselement (29; 39; 49) aufweist,

- mit einer Abtasteinrichtung, die folgende Bestandteile umfaßt:

einen Sender (11), der Strahlung emittiert, mit deren Hilfe ein das Markierungselement (26; 36; 46) überstreichender Abtastfleck (22; 32; 41, 42) erzeugt wird, und

einen Empfänger (8; 35; 44, 45), der von dem Abtastfleck (22; 32; 41, 42) durch das Markierungselement (26; 36; 46) beeinflußte Strahlung empfängt und in ein elektrisches Ausgangssignal umwandelt, und

- mit einer Speicher- und Recheneinheit (10), die mit Hilfe des Ausgangssignals des Empfängers (8; 35; 44, 45) den jeweiligen Abstand zwischen dem Markierungselement (26; 36; 46) und dem Referenz-Markierungselement (29; 39; 49) ermittelt,

dadurch **gekennzeichnet,**

daß die Abtasteinrichtung bezüglich des Referenz-Markierungselementes (29; 39; 49) während der Messung unbeweglich angeordnet ist,

daß zwischen dem Sender (11) und dem Körper (20; 30; 40) eine Ablenkvorrichtung (14) vorgesehen ist, mit deren Hilfe der Abtastfleck (22; 32; 41, 42) unabhängig von einer Relativbewegung zwischen der Abtasteinrichtung und dem Körper (20; 30; 40) zum Überstreichen des Markierungselementes (26; 36; 46) bewegbar ist, und daß die Bewegungsbahn des Abtastflecks (22; 32; 41, 42), das Markierungselement (26; 36; 46) und der Empfänger (8; 35; 44, 45) so aufeinander abgestimmt ausgebildet und angeordnet sind, daß das Ausgangssignal des Empfängers (8; 35; 45, 45) ein Differentialverhalten zeigt.

2. Meßanordnung nach Anspruch 1, dadurch **gekennzeichnet,** daß das Markierungselement eine auf einer Oberfläche des Körpers vorgesehene Justierfigur, insbesondere ein Justierkreuz ist.

3. Meßanordnung nach Anspruch 1, dadurch **gekennzeichnet,** daß das Markierungselement eine Kante oder sonstige Begrenzungslinie des Körpers ist.

4. Meßanordnung nach einem der Ansprüche 1 bis 3, dadurch **gekennzeichnet,** daß das Referenz-Markierungselement (29; 39; 49) eine durch die Meßanordnung vorgegebene Referenzlinie ist.

5. Meßanordnung nach einem der Ansprüche 1 bis 4, dadurch **gekennzeichnet,** daß die Ablenkvorrichtung (14) zur Verschiebung des Abtastflecks (22; 32; 41, 42) ein veränderbares elektrisches und/oder magnetisches Feld erzeugt.

6. Meßanordnung nach Anspruch 5, dadurch **gekennzeichnet,** daß der Sender die Elektronenkanone (11) einer Elektronenstrahlröhre (5) ist, deren Ablenkeinheit (14) die Ablenkvorrichtung bildet.

7. Meßanordnung nach einem der Ansprüche 1 bis 6, dadurch **gekennzeichnet,** daß der Empfänger eine Differential-Fotodiode (8) umfaßt, deren Steg (25) sich unter einem von 0° verschiedenen Winkel zur Bewegungsrichtung des Körpers (20) erstreckt, daß das Markierungselement (26) ein langgestreckter Streifen ist, der sich hinsichtlich der Transparenz oder des Reflexionsvermögens von den ihn umgebenden Bereichen des Körpers (20) unterscheidet und dessen Längsrichtung sowohl mit dem Steg (25) der Differential-Fotodiode (8) als auch mit der Bewegungsrichtung des Körpers (20) einen von 0° und von 90° verschiedenen Winkel einschließt, und daß der Abtastfleck (22) in Richtung des Steges (25) der DifferentialFotodiode (8) über den das Markierungselement (26) bildenden Streifen bewegt wird.

8. Meßanordnung nach einem der Ansprüche 1 bis 6, dadurch **gekennzeichnet,** daß der Empfänger eine Fotodiode (35) umfaßt, deren Längsrichtung sich unter einem von 90° verschiedenen Winkel zur Bewegungsrichtung des Körpers (30) erstreckt, daß das Markierungselement (36) aus zwei aneinandergrenzenden Bereichen (37, 38) besteht, von denen der eine (37) eine kleinere und der andere (38) eine größere Transparenz oder ein kleineres bzw. größeres Reflexionsvermögen aufweist, als die sie umgebenden Teile des Körpers (30), daß die Grenzlinie zwischen den beiden Bereichen (37, 38) unter einem von 0° verschiedenen Winkel sowohl zur Längsrichtung der Fotodiode (35) als auch zur Bewegungsrichtung des Körpers (30) verläuft und daß der Ahtastfleck (32) in Längsrichtung der Fotodiode (35) über das Markierungselement (36) bewegt wird.

9. Meßanordnung nach einem der Ansprüche 1 bis 6, dadurch **gekennzeichnet,** daß der Empfänger zwei zueinander parallel angeordnete Fotodioden (44, 45) umfaßt, deren Längsrichtung sich unter einem von 90° verschiedenen Winkel zur Bewegungsrichtung des Körpers (40) erstreckt, daß das Markierungselement (46) ein langgestreckter Streifen ist, der sich hinsichtlich der Transparenz oder des Reflexionsvermögens von den ihn umgebenden Bereichen des Skalenträgers (40) unterscheidet und dessen Längsrichtung sowohl mit der Längsrichtung der Fotodioden (44, 45) als auch mit der Bewegungsrichtung des Körpers (40) einen von 0° verschiedenen Winkel einschließt, und daß zwei Abtastflecke (41, 42) erzeugt und so in Längsrichtung der Fotodioden (44, 45) über das Markierungselement (46) bewegt werden, daß die Signale, von denen das eine bei der Abtastung des Markierungselementes (46) durch den einen Abtastfleck (41) von der einen Fotodiode (44) und das andere bei der Abtastung des Markierungselementes (46) durch den anderen Abtastfleck (42) von der anderen Fotodiode (45) erzeugt werden, in einem festen zeitlichen Verhältnis so aufeinanderfolgen, daß sie sich teilweise zeitlich überlappen.

10. Meßanordnung nach einem der Ansprüche 1 bis 6, dadurch **gekennzeichnet,** daß der Körper (20; 30; 40) ein Skalenträger ist, auf dessen Oberfläche eine Vielzahl von Skalenteilungs-Markierungen angebracht ist, von denen jede das momentan abgetastete Markierungselement (26; 36; 46) bilden kann.

11. Meßanordnung nach den Ansprüchen 7 und 10, dadurch **gekennzeichnet,** daß die die Markierungen (26) bildenden, langgestreckten Streifen zueinander in etwa parallel ausgerichtet sind und daß die Abstände zwischen den Streifen so gewählt sind, daß in jeder Stellung des Skalenträgers (20) wenigstens ein Streifen die beiden lichtempfindlichen Flächen (27, 28) der Differential-Fotodiode (8) kreuzt.

12. Meßanordnung nach den Ansprüchen 8 und 10, dadurch **gekennzeichnet,** daß die aneinandergrenzenden Bereiche (37, 38) eines jeden Markierungselementes (36) als langgestreckte Streifen ausgebildet sind, daß die Markierungselemente (36) zueinander in etwa parallel ausgerichtet sind und daß die Abstände zwischen den Markierungselementen (36) so gewählt sind, daß in jeder Stellung des Skalenträgers (30) wenigstens ein Markierungselement (36) die lichtempfindliche Fläche der Fotodiode (35) kreuzt.

**13.** Meßanordnung nach Anspruch 9 und 10, dadurch **gekennzeichnet,** daß die die Markierungen (36) bildenden langgestreckten Streifen zueinander in etwa parallel ausgerichtet sind und daß die Abstände zwischen den Streifen so gewählt sind, daß in jeder Stellung des Skalenträgers (40) wenigstens ein Streifen die lichtempfindlichen Flächen beider Fotodioden (44, 45) kreuzt.

**14.** Meßanordnung nach einem der Ansprüche 1 bis 8 oder 10 bis 12, dadurch **gekennzeichnet,** daß die Ablenkvorrichtung (14) für eine periodische Bewegung des Abtastflecks (22; 32) über das Markierungselement (26; 36) ausgebildet ist.

**15.** Meßanordnung nach Anspruch 9 oder 13, dadurch **gekennzeichnet,** daß die Ablenkvorrichtung (14) für eine periodische Bewegung der beiden Abtastflecke (41; 42) über das Markierungselement (46) ausgebildet ist.

**16.** Meßanordnung nach einem der vorhergehenden Ansprüche, dadurch **gekennzeichnet,** daß die Speicher- und Recheneinheit (10) zur Auswertung des Wertes ausgebildet ist, den die an der Ablenkvorrichtung (14) anliegende Ablenkspannung zu dem Zeitpunkt besitzt, in welchem das Ausgangssignal des Empfängers beim Abtasten eines Markierungselementes (26; 36; 46) einen vorgegebenen Kurvenpunkt durchläuft, um den momentanen Abstand des abgetasteten Markierungselementes (26; 36; 46) von dem Referenz-Markierungselement (29; 39; 49) zu bestimmen.

**17.** Meßanordnung nach einem der Ansprüche 7 bis 16, dadurch **gekennzeichnet,** daß der vorgegebene Kurvenpunkt ein Nulldurchgang des ein Differentialverhalten aufweisenden Ausgangssignals ist.

**18.** Meßanordnung nach Anspruch 16 oder 17, dadurch **gekennzeichnet,** daß die Ablenkspannung mit Hilfe eines Digital/Analog-Wandlers aus einer Folge von Digital-Worten erzeugt wird, und daß die Speicher- und Recheneinheit (10) zur Auswertung des Digitalwortes ausgebildet ist, das beim Durchlaufen des vorgebbaren Kurvenpunktes anliegt, um den momentanen Abstand des abgetasteten Markierungselementes (26; 36; 46) von dem Referenz-Markierungselement (29; 39; 49) zu bestimmen.

**19.** Meßanordnung nach einem der Ansprüche 10 bis 18, dadurch **gekennzeichnet,** daß sie weiterhin ein Eichnormal, insbesondere einen hochgenauen Hilfs-Markierungsträger umfaßt.

**20.** Meßanordnung nach einem der vorhergehenden Ansprüche, dadurch **gekennzeichnet,** daß eine Projektionsvorrichtung vorgesehen ist, die die Hauptachse des Strahlungsbündels, das den Abtastfleck (22; 32; 41, 42) erzeugt, immer senkrecht zu der das Markierungselement (26; 36; 46) tragenden Oberfläche des Körpers (20; 30; 40) hält.

**Claims**

**1.** A measuring arrangement for determining the distance of a marking element (26; 36; 46) which is provided on a body (20; 30; 40) displaceable relative to the measuring arrangement, from a reference marking element (29; 39; 49), comprising:

- a scanning means which includes the following components:

    a transmitter (11) for emitting radiation by means of which a scanning spot (22; 32; 41, 42) which passes over the marking element (26; 36; 46) is produced, and

    a receiver (8; 35; 44, 45) for receiving radiation which is influenced by the marking element (26; 36; 46) from the scanning spot (22; 32; 42) and converting it into an electrical output signal, and

- a storage and computing unit (10) which by means of the output signal of the receiver (8; 35; 44, 45) determines the respective spacing between the marking element (26; 36; 46) and the reference marking element (29; 39; 49)

characterised in that

the scanning means is arranged immovably relative to the reference marking element (29; 39; 49) during the measuring operation,

provided between the transmitter (11) and the body (20; 30; 40) is a deflector means (14) by means of which the scanning spot (22; 32; 41, 42) is movable independently of a relative movement between the scanning means and the body (20; 30; 40), for passing over the marking element (26; 36; 46), and

the path of movement of the scanning spot (22; 32; 41, 42), the marking element (26; 36; 46) and the receiver (8; 35; 44, 45) are designed and arranged to be so matched to each other that the output signal of the receiver (8; 35; 44, 45) presents a differential characteristic.

2. A measuring arrangement according to claim 1 characterised in that the marking element is an adjusting figure, in particular an adjusting cross, which is provided on a surface of the body.

3. A measuring arrangement according to claim 1 characterised in that the marking element is an edge or other boundary line of the body.

4. A measuring arrangement according to one of claims 1 to 3 characterised in that the reference marking element (29; 39; 49) is a reference line which is predetermined by the measuring arrangement.

5. A measuring arrangement according to one of claims 1 to 4 characterised in that the deflector means (14) for displacement of the scanning spot (22; 32; 41, 42) produces a variable electrical and/or magnetic field.

6. A measuring arrangement according to claim 5 characterised in that the transmitter is the electron gun (11) of an electron beam tube (5) whose deflector unit (14) forms the deflector means.

7. A measuring arrangement according to one of claims 1 to 6 characterised in that the receiver includes a differential photodiode (8) whose limb portion (25) extends at an angle which is different from 0° relative to the direction of movement of the body (20), that the marking element (26) is an elongated strip which differs from the regions surrounding same of the body (20) in respect of transparency or the reflection factor thereof and whose longitudinal direction includes an angle which is different from 0° and from 90° both to the limb portion (25) of the differential photodiode (8) and also the direction of movement of the body (20), and that the scanning spot (22) is moved in the direction of the limb portion (25) of the differential photodiode (8) over the strip forming the marking element (26).

8. A measuring arrangement according to one of claims 1 to 6 characterised in that the receiver includes a photodiode (35) whose longitudinal direction extends at an angle which is different from 90° relative to the direction of movement of the body (30), that the marking element (36) comprises two mutually adjoining regions (37, 38) of which one region (37) has a lower degree of transparency or a lower reflection factor and the other (38) has a higher degree of transparency or a greater reflection factor, than the parts surrounding same of the body (30), that the boundary line between the two regions (37, 38) extends at an angle which is different from 0° both with respect to the longitudinal direction of the photodiode (35) and also with respect to the direction of movement of the body (30) and that the scanning spot (32) is moved in the longitudinal direction of the photodiode (35) over the marking element (36).

9. A measuring arrangement according to one of claims 1 to 6 characterised in that the receiver includes two photodiodes (44, 45) which are arranged in mutually parallel relationship and whose longitudinal direction extends at an angle which is different from 90° relative to the direction of movement of the body (40), that the marking element (46) is an elongated strip which differs in regard to transparency or the reflection factor from the regions surrounding same of the scale carrier (40) and whose longitudinal direction includes an angle which is different from 0° both with the longitudinal direction of the photodiodes (44, 45) and also with the direction of movement of the body (40) and that two scanning spots (41, 42) are generated and are moved in the longitudinal direction of the photodiodes (44, 45) over the marking element (46) such that the signals of which one is generated upon scanning of the marking element (46) by means of the one scanning spot (41) by the one photodiode (44) and the other is generated upon scanning of the marking element (46) by means of the other scanning spot (42) by the other photodiode (45) follow each other in a fixed relationship in respect of time in such a way that they partially overlap each other in respect of time.

10. A measuring arrangement according to one of claims 1 to 6 characterised in that the body (20; 30; 40) is a scale carrier, on the surface of which is disposed a plurality of scale division markings of which each can form the instantaneously scanned marking element (26; 36; 46).

11. A measuring arrangement according to claims 7 and 10 characterised in that the elongated strips forming the markings (26) are oriented in mutually substantially parallel relationship and that the spacings between the strips are so selected that in any position of the scale carrier (20) at least one strip crosses the two photosensitive surfaces (27, 28) of the differential photodiode (8).

12. A measuring arrangement according to claims 8 and 10 characterised in that the mutually adjoining regions (37, 38) of each marking element (36) are formed as elongated strips, that the marking elements (36) are oriented in mutually substantially parallel relationship and that the spacings between the marking elements (36) are so selected that in any position of the scale carrier (30) at least one marking element (36) crosses the photosensitive surface of the photodiode (35).

13. A measuring arrangement according to claim 9 and claim 10 characterised in that the elongated strips forming the markings (36) are oriented in mutually substantially parallel relationship and that the spacings between the strips are so selected that in any position of the scale carrier (40) at least one strip crosses the photosensitive surfaces of both photodiodes (44, 45).

14. A measuring arrangement according to one of claims 1 to 8 or 10 to 12 characterised in that the deflector means (14) is designed for a periodic movement of the scanning spot (22; 32) over the marking element (26; 36).

15. A measuring arrangement according to claim 9 or claim 13 characterised in that the deflector means (14) is designed for a periodic movement of the two scanning spots (41, 42) over the marking element (46).

16. A measuring arrangement according to one of the preceding claims characterised in that the storage and computing unit (10) is designed to evaluate the value of the deflecting voltage applied to the deflector means (14) at the moment in time at which the output signal of the receiver passes through a predetermined point on the curve upon scanning of a marking element (26; 36; 46) for determining the instantaneous spacing of the scanned marking element (26; 36; 46) from the reference marking element (29; 39; 49).

17. A measuring arrangement according to one of claims 7 to 16 characterised in that the predetermined point on the curve is a passage through zero of the output signal which has a differential characteristic.

18. A measuring arrangement according to claim 16 or claim 17 characterised in that the deflecting voltage is generated from a sequence of digital words by means of a digital-analog converter and that the storage and computing unit (10) is designed to evaluate the digital word which occurs on passing through the predeterminable point on the curve for determining the instantaneous spacing of the scanned marking element (26; 36; 46) from the reference marking element (29; 39; 49).

19. A measuring arrangement according to one of claims 10 to 18 characterised in that it further includes a calibration standard, in particular a high-precision auxiliary marking carrier.

20. A measuring arrangement according to one of the preceding claims characterised in that there is provided a projection means which holds the primary axis of the radiation beam which generates the scanning spot (22; 32; 41, 42) always normal to the surface, which carries the marking element (26; 36; 46), of the body (20; 30; 40).

**Revendications**

1. Dispositif de mesure pour déterminer la distance que présente un élément formant repère (26; 36; 46) qui est prévu sur un corps (20; 30; 40) pouvant être déplacé par rapport au système de mesure, à un élément formant repère de référence (29; 39; 49),
   - comportant un dispositif de balayage qui comprend les parties constitutives suivantes:
   un émetteur (11) qui émet un rayonnement, à l'aide duquel est engendrée une tache de balayage (22; 32; 41, 42) balayant l'élément formant repère (26; 36; 46), et
   un récepteur (8; 35; 44, 45) qui reçoit de la tache de balayage (22; 32; 41, 42) un rayonnement influencé par l'élément formant repère (26; 36; 46), et le transforme en un signal de sortie électrique, et
   - comportant une unité de mémoire et de calcul (10) qui, à l'aide du signal de sortie du récepteur (8; 35; 44, 45), détermine la distance respective entre l'élément formant repère (26; 36; 46) et l'élément formant repère de référence (29; 39; 49),
   caractérisé en ce que le dispositif de balayage est monté de manière à être immobile par rapport à l'élément formant repère de référence (29; 39; 49), au cours de la mesure, en ce qu'entre l'émetteur (11) et le corps (20; 30; 40) est prévu un dispositif de déviation (14) à l'aide duquel la tache de balayage (22; 32; 41, 42) peut être déplacée pour balayer l'élément formant repère (26; 36; 46), indépendamment d'un mouvement relatif entre le dispositif de balayage et le corps (20; 30; 40), et en ce que la trajectoire de déplacement de la tache de balayage (22; 32; 41, 42), l'élément formant repère (26; 36; 46) et le récepteur (8; 35; 44, 45) sont adaptés entre eux et disposés de telle sorte que le signal de sortie du récepteur (8; 35; 44, 45) présente une allure différentielle.

2. Dispositif de mesure selon la revendication 1, caractérisé en ce que l'élément formant repère est une figure de réglage prévue sur une surface du corps, notamment un réticule de réglage.

3. Dispositif de mesure selon la revendication 1, caractérisé en ce que l'élément formant repère est un bord ou une autre ligne de délimitation quelconque du corps.

4. Dispositif de mesure selon l'une des revendications 1 à 3, caractérisé en ce que l'élément formant repère de référence (29; 39; 49) est une ligne de référence prédéfinie par le système de mesure.

5. Dispositif de mesure selon l'une des revendications 1 à 4, caractérisé en ce que le dispositif de déviation (14) engendre un champ électrique et/ou magnétique variable, pour le déplacement de la tache de balayage (22; 32; 41, 42).

6. Dispositif de mesure selon la revendication 5, caractérisé en ce que l'émetteur est constitué par le canon à électrons (11) d'un tube à faisceau électronique (5) dont l'unité de déviation (14) constitue le dispositif de déviation.

7. Dispositif de mesure selon l'une des revendications 1 à 6, caractérisé en ce que le récepteur comprend une photodiode différentielle (8) dont la barrette (25) s'étend sous un angle différent de 0° par rapport à la direction de déplacement du corps (20), en ce que l'élément formant repère (26) est une bande allongée qui se diffférencie, quant à la transparence ou à l'aptitude à la réflexion, des zones du corps (20) qui l'entourent, et dont la direction longitudinale forme un angle différent de 0° et de 90°, aussi bien avec la barrette (25) de la photodiode différentielle (8), qu'avec la direction de déplacement du corps (20), et en ce que la tache de balayage (22) est déplacée au-dessus de la bande constituant l'élément formant repère (26), dans la direction de la barrette (25) de la photodiode différentielle (8).

8. Dispositif de mesure selon l'une des revendications 1 à 6, caractérisé en ce que le récepteur comprend une photodiode (35) dont la direction longitudinale s'étend sous un angle différent de 90° par rapport à la direction de déplacement du corps (30), en ce que l'élément formant repère (36) est constitué par deux zones adjacentes (37,38) entre elles dont l'une (37) présente une transparence plus faible et l'autre (38) une transparence plus grande, ou bien respectivement une plus petite ou une plus grande aptitude à la réflexion, que les parties du corps (30) qui les entourent, en ce que la ligne de délimitation entre les deux zones (37, 38) s'étend sous un angle différent de 0°, aussi bien par rapport à la direction longitudinale de la photodiode (35), que par rapport à la direction de déplacement du corps (30), et en ce que la tache de balayage (32) est déplacée au-dessus de l'élément formant repère (36), dans la direction longitudinale de la photodiode (35).

9. Dispositif de mesure selon l'une des revendications 1 à 6, caractérisé en ce que le récepteur comprend deux photodiodes (44, 45) disposées parallèlement entre elles et dont la direction longitudinale s'étend sous un angle différent de 90° par rapport à la direction de déplacement du corps (40), en ce que l'élément formant repère (46) est constitué par une bande allongée, qui se différencie, quant à la transparence ou à l'aptitude à la réflexion, des zones du support de graduation (40) qui l'entourent, et dont la direction longitudinale forme un angle différent de 0°, aussi bien avec la direction longitudinale des photodiodes (44, 45), qu'avec la direction de déplacement du corps (40), et en ce que deux taches de balayage (41, 42) sont créées et déplacées ainsi au-dessus de l'élément formant repère (46), dans la direction longitudinale des photodiodes (44, 45), de telle sorte que les signaux, dont l'un est engendré par une photodiode (44) lors du balayage de l'élément formant repère (46) par une tache de balayage (41), et dont l'autre est engendré par l'autre photodiode (45) lors du balayage de l'élément formant repère (46) par l'autre tache de balayage (42), se succèdent à un intervalle de temps fixe de manière qu'ils se chevauchent partiellement dans le temps.

10. Dispositif de mesure selon l'une des revendications 1 à 6, caractérisé en ce que le corps (20; 30; 40) est un support de graduation sur la surface duquel sont rapportés un grand nombre de repères de division de graduation dont chacun peut constituer l'élément formant repère (26; 36; 46) qui est balayé instantanément.

11. Dispositif de mesure selon les revendications 7 et 10, caractérisé en ce que les bandes allongées constituant les repères (26) sont orientées à peu près parallèlement entre elles, et en ce que les intervalles entre les bandes sont choisis de manière que dans chaque position du support de graduation (20), au moins une bande croise les deux surfaces photosensibles (27, 28) de la photodiode différentielle (8).

12. Dispositif de mesure selon les revendications 8 et 10, caractérisé en ce que les zones adjacentes (37, 38) entre elles de chaque élément formant repère (36), sont réalisées sous la forme de bandes allongées, en ce que les éléments formant repère (36) sont orientés à peu près parallèlement entre eux, et en ce que les intervalles entre les éléments formant repère (36) sont choisis de manière que dans chaque position du support de graduations (30), au moins un élément formant repère (36) croise la surface photosensible de la photodiode (35).

13. Dispositif de mesure selon les revendications 9 et 10, caractérisé en ce que les bandes allongées constituant les repères (46) sont orientés à peu près parallèlement entre elles, et en ce que les intervalles entre les bandes sont choisis de manière que dans chaque position du support de graduation (40), au moins une bande croise les surfaces photosensibles des deux photodiodes (44, 45).

14. Dispositif de mesure selon l'une des revendications 1 à 8 ou 10 à 12, caractérisé en ce que le dispositif de déviation (14) est conçu pour un mouvement périodique de la tache de balayage (22; 32) au-dessus de l'élément formant repère (26; 36).

15. Dispositif de mesure selon la revendication 9 ou 13, caractérisé en ce que le dispositif de déviation (14) est conçu pour un mouvement périodique des deux taches de balayage (41, 42) au-dessus de l'élément formant repère (46).

16. Dispositif de mesure selon l'une des revendications précédentes, caractérisé en ce que l'unité de mémoire et de calcul (10) est conçue pour le traitement de la valeur que possède la tension de déviation appliquée au dispositif de déviation (14), à l'instant où le signal de sortie du récepteur passe par un point de courbe prédéfini, lors du balayage d'un élément formant repère (26; 36; 46), en vue de déterminer la distance instantanée de l'élément formant repère (26; 36; 46) à l'élément formant repère de référence (29; 39; 49).

17. Dispositif de mesure selon l'une des revendications 7 à 16, caractérisé en ce que le point de courbe prédéfini est un passage par zéro du signal de sortie présentant une allure différentielle.

18. Dispositif de mesure selon la revendication 16 ou 17, caractérisé en ce que la tension de déviation est élaborée à l'aide d'un convertisseur numérique/analogique, à partir d'une succession de mots numériques, et en ce que l'unité de mémoire et de calcul (10) est conçue pour le traitement du mot numérique appliqué lors du passage du point de courbe prédéfini, en vue de déterminer la distance instantanée de l'élément formant repère (26; 36; 46) ayant été balayé, à l'élément formant repère de référence (29; 39; 49).

19. Dispositif de mesure selon l'une des revendications 10 à 18, caractérisé en ce qu'il comprend en outre, un étalon de mesure, notamment un support de repères auxiliaires d'une précision extrême.

20. Dispositif de mesure selon l'une des revendications précédentes, caractérisé en ce qu'il est prévu un dispositif de projection qui maintient l'axe principal du faisceau de rayons qui engendre la tache de balayage (22; 32; 41, 42), toujours perpendiculaire à la surface du corps (20; 30; 40) portant l'élément formant repère (26; 36; 46).

FIG. 1

FIG. 2

FIG. 3

# FIG. 4

# FIG. 5

# FIG. 6

# FIG. 7